# EUROPEAN PATENT APPLICATION

(11) **EP 1 090 556 A1**
(43) Date of publication of application: **11.04.2001**
(21) Application number: 99203289.6
(22) Date of filing: 07.10.1999
(51) Int. Cl.: A23L 1/01, A23P 1/16, A23L 1/16, A23L 3/375

(54) **Method for producing a microwavable frozen food product comprising carbon dioxide bubbles**

(71) Applicant: SOCIETE DES PRODUITS NESTLE S.A., 1800 Vevey (CH)
(72) Inventor: Merabet, Mustapha, 1807 Blonay (CH)
(74) Representative: Borne, Patrice Daniel

(57) **Abstract**

The invention relates to a method for producing a frozen food product having enhanced coupling properties with microwaves comprising:
providing a non-frozen food product,
adding to the non-frozen food product an amount of carbon dioxide in dry-ice form,
freezing said food product containing said carbon dioxide to obtain a frozen food product while allowing said carbon dioxide to sublimate and form gas bubbles distributed within the frozen food product.

The invention also relates to a frozen food product comprising at least 3 % by weight of carbon dioxide in the form of gas bubbles distributed within the frozen food product.

## Description

The invention relates to improvements in the microwave heating of frozen food products. In particular, the invention relates to a method for preparing frozen food products having enhanced coupling properties with microwaves which are such that the reconstitution time can be significantly reduced. The invention also relates to a frozen food product having such properties.

The microwave heating regime of frozen food products is characterised by a slow and largely non-uniform reheating step before the thawing, followed by a more rapid heating of the parts of the product that thawed first. In fact, the non-uniformity of the heating before the thawing is translated and even amplified during the second heating step. Therefore, there is a need to focus on the frozen state and thus modify the physical properties of the frozen product in order to speed up the thawing and to reduce the temperature gradients between the various parts of the food product during the first microwave heating step.

It has been found that frozen foods have very low dielectric properties at the microwave heating frequency of 2.45 Ghz ranging from 1.1 to 2.5 for the real part of the permitivity ε' and from 0.01 to 0.0001 for the imaginary part ε" (microwave absorption) which are both close to that of gases and of air at ambient conditions. The microwave heating rate which is induced by dipolar absorption, is proportional to the microwave absorption ε", and therefore is very small for all frozen products. In addition, because of the low values of the dielectric parameters, the impedance of the whole frozen product would not affect the microwave fields distribution in the oven cavity, and thus the resulting heating pattern would be largely non-uniform.

The objective of the present invention is the improvement of the microwave reconstitution of frozen food products by reduction of the time and improvement of the uniformity of the heating pattern of solid and semi-solid food products reheated from their frozen state in microwave oven.

The novelty approach of the present invention consists in promoting another type of interactions for the microwave heating as the dipolar absorption would not be sufficient unless major changes are made on the product recipe which is in a majority of cases not possible. For that, the invention proposes mainly to promote the interactions of the microwave fields with the surfaces of gas bubbles that are entrapped within the frozen food matrix which the applicant has proved to be sufficient to initiate microwave heating of the frozen products. More particularly the invention uses the capability of carbon dioxide to be added in the frozen food product in solid form and its property to sublimate in forming gas so as to produce this entrapment in the frozen food product.

US patent 4,428,971 assigned to the applicant and so well known from the applicant relates to a process for the preparation of a composition for frozen or deep-frozen soufflés. The authors show that the incorporation of an amount of carbon dioxide gas into the soufflé would promote a better rising of the soufflé during its baking from the frozen state to the final product in a conventional oven and would so reduce its collapsing when it is served. However, the food product although it is adapted to be cooked in traditional ovens would not be suitable in microwave heating mode. In US patent 4,428,971, a small amount of carbon dioxide is fully dissolved into the soufflé base, which is then stored in a freezer. The dissolution of the carbon dioxide is achieved by injecting the gas in the product, or by mixing solid carbon dioxide with the soufflé recipe until the complete dissolution of the gas is achieved.

In both cases, the product obtained after this processing step, is a "batter" with some gas dissolved into it. Macroscopically, this carbon dioxide gas does not form pockets in the "batter" because of the quantity of solid carbon dioxide used, which is small, and because of the way how it is incorporated into the soufflé basic composition. As a matter of fact, the carbon dioxide is mixed in small amount at low speed with the recipe until the gas has completely dissolved. During the reheating step of the frozen composition, the dissolved gas would start expanding, so that the whole upper part of the soufflé rises during the baking without collapsing when it is served. Therefore, the frozen soufflé has not a structure which is microscopically modified in a way to provide significant improvements to microwaves.

US 5,624,700 to Brighan Younf University refers to the incorporation of relatively large amounts of carbon dioxide in solid or semi-solid foods during their final processing steps for making a semi-solid or solid spoonable food. However, the food products as manufactured are carbonated cream or ice cream products which are not intended to be processed in microwave ovens.

JP 59146542 A1 to Sawaguchi Kazuore relates to a mixture for making carbonated ice cream, sherbet or frozen yogurt.

JP 6062754 A to Kanebo Ltd relates to the production of carbonated ice candy.

The object of the present invention is to propose a method of preparation of frozen food products which reduces the heating time and renders the heating pattern more uniform by microwaves.

For that, the method comprises providing a non-frozen food product, adding to the non-frozen food product an amount of carbon dioxide in dry-ice form and freezing said food product containing said carbon dioxide to obtain a frozen food product while allowing said carbon dioxide to sublimate and form gas bubbles distributed within the frozen food product.

Therefore, the generally compact and dense frozen food product is transformed into a porous frozen food product which modifies the mode of interactions between the impinging microwaves and the internal surface of the gas holes. The presence of the gas holes or bubbles distributed within the product also promotes the deposition and absorption of the microwave energy throughout the whole product, reducing then the temperature gradients between the various parts of the product and also the time needed to bring the product to its thawed state.

It has further been surprisingly found that a substantially fine and uniformly distributed porous structure having enhanced coupling properties with microwaves could be obtained when the temperature difference between the initial temperature of the carbon dioxide when added to the food product and the final temperature of the frozen food product at storage is in a range of 35 to 60°C, preferably in the range 35 to 50°C, and more preferably 42°C. Indeed, the temperature difference between the initial and the final state of the carbon dioxide drives the sublimation process. We found that for the temperature gradient in the given range, the sublimation of the dry-ice particles has left gas bubbles within the frozen food structure, while for the larger temperature gradients which would be intuitively achieved by normal processing, the gas has escaped and has left large cracks and openings in the frozen food structure.

In order to obtain the proper temperature gradient of the carbon dioxide which sublimates slowly within the frozen food product, it is necessary to maintain the dry-ice carbon dioxide at about -62°C in a tank at a pressure of about 2.3 bars and to rapidly freeze the frozen food with the carbon dioxide to a temperature of storage comprised between -21 to-18 °C, preferably -20°C. It must be noted that usually, carbon dioxide freezes at -78°C which, if sublimation is carried out at ambient temperature of +18°C, would lead to a gradient of 96°C. However, sublimation at ambient is not satisfactory as the gas would escape from the food product and no porous structure would be obtained.

In a more preferred embodiment of the invention, the freezing comprises lowering the food product to a temperature lower than the temperature of storage of the frozen food product, then slowly increasing the temperature to the temperature of storage.

More preferably, the freezing comprises lowering the non-frozen food product to a temperature comprised between -39 to -45°c, then slowly increasing to a temperature of storage comprised between - 21 to - 18°C. Accordingly, by first decreasing the temperature to a temperature below -39°C, the food matrix can freeze more rapidly and consequently it can slow down the sublimation process of the carbon dioxide ice to form the desired size of gas bubbles and to reach an even distribution of gas bubbles throughout the whole product. Such feature cannot be obtained when simply placing the carbonated food product in a conventional freezer at about - 20°C. The freezing time would be too long, resulting in a reduced amount of bubbles and a significant part of gas would have escaped the product before the product would have sufficiently hardened.

In an alternative, rapid freezing to the temperature of storage of food product after addition of the carbon dioxide can be carried out if the freezing time is reduced to 1 to 5 minutes. Industrial cooling means may be used to obtain low freezing times. Suitable industrial cooling means comprises air forced cooling means or cryogenic cooling means. For instance, air forced cooling means can be a tunnel freezer in which cold air is circulated forcedly over the products. Cryogenic cooling means can be cryogenic freezers in which liquid Nitrogen is used as the refrigerant that is sprayed on the products in the freezing cavity so as to allow a very rapid freezing of food products.

In a preferred aspect of the invention, carbon dioxide is added in dry-ice form in an amount of at least 3 % by weight of the food product. A sufficient amount of carbon dioxide is necessary to generate clearly distinct gas bubbles in the food matrix after freezing. We found that below this limit, the carbon dioxide had a tendency to dissolve into the food matrix while not forming an even porous pattern.

The upper limit for the amount of dry-ice particles to be incorporated into the products is dictated by the acceptability of the appearance of the food product which has a tendency to increase in size. For typical food product such as lasagne or similar, the upper limit is about 6% by weight of dry-ice for which relatively small but still acceptable expansion of the products is noticed. Obviously, larger amounts of dry-ice incorporated in products would result in larger volumetric expansion, and the criteria of acceptability would highly depend on the product type.

Preferably, carbon dioxide is added in the form of finely ground dry-ice particles having an average size of 1 to 4 mm, preferably of 2 to 3 mm, to the food product. Larger sized particles would result after sublimation in relatively large gas pockets within the food product which would not be suitable for a good coupling to the microwaves.

The size of the bubble gas should be at least of about 1 millimetre in order to induce a substantial effect on the microwave heating regime of the frozen product. The 1-mm size is considered as the minimum size for positively affecting the coupling microwaves/product. However, the size of the gas bubbles may vary depending upon the nature of the food product. In particular, some ingredients such as hydrocolloids or physical properties such as low pH induce the formation of large bubbles even for low air volume fraction while conversely, others such as food products containing significant amounts of salts will induce smaller bubbles.

Most of the added CO₂ is retained into the frozen product, as the CO₂ is much heavier than air (the molecular weight of CO₂ is 44, compared to 14 for Nitrogen which is the main constituent of air). As the dry-ice particles are very quickly embedded into the food matrix, there is a very limited loss of CO₂ by diffusion in air, provided the sublimation process is controlled as described before. In such case, the loss is smaller than 1%.

### EXAMPLE 1:

1. Blocks of solid carbon dioxide are finely ground in a mill, and the average size of the particles obtained is about 2 to 3 mm.

2. The dry-ice particles are stored in a special tank into which the internal pressure is maintained at about 2 bars at a temperature of about - 62°C, so that the particles do not stick to each other and, do not evaporate.

3. 1-kilogramme Lasagne with Bolognaise sauce is provided as the food product (3-4 portions). The Bolognaise sauce is thoroughly and quickly mixed with about 3 % to 6 % by weight of the dry-ice particles in a blender of helical-type with 3 blades and jacketed for a maximal pressure of 5 bars, at ambient temperature and allowed to expand slightly for less than 1 minute.

4. The whole mixture is then poured after each pasta layer to form the lasagne structure in a tray and placed very quickly in a freezer at -40°C for about 2 to 3 hours before rising the temperature of the freezer to the final frozen storage temperature of -20°C, allowing a slow sublimation completed in about 2 hours of the dry-ice particles as the surrounding food matrix start to freeze.

5. After at least 2 days of storage freezing the frozen lasagne is ready to be reconstituted in microwave oven in a shorter time and with more even pattern compared to a standard non-treated lasagne product.

### EXAMPLE 2:

1.134 Kg of a preparation comprising macaroni and cheese as the food product which is prepared in accordance with the operations 1 to 5 of Example 1, except that both the two components macaroni and cheese are mixed thoroughly with 3 to 6% by weight of the dry-ice particles.

### EXAMPLE 3:

Microwave reheating trials have been performed in a side-fed energy type and turntable microwave oven referenced Panasonic Genius NN-6858 delivering a power output of 720 Watts.

Tests were carried out in the ovens for the lasagne of Example 1 for a reheating time of 30 minutes and compared to a non-treated lasagne product.

The results for the pertinent microwave heating parameters are given in table 1 below.

**TABLE 1**

| | ΔTm/Δt (°C/min) | | TI (°C) |
|---|---|---|---|
| Comparative | | | |
| Non treated Lasagne | 3.03 | 8.3 | 41.5 |

| Invention | | | |
|---|---|---|---|
| Lasagne with 3% b.w. dry-ice | 3.63 | 7.1 | 56.4 |
| Lasagne with 6% b.w. dry-ice | 3.91 | 5.8 | 62.7 |

The apparent mean heating rate is termed "AHR" and formulated by ΔTm/Δt where Tm= Tm - Ti with Tm: the mean temperature on top surface of the product as deduced from a thermogram and Ti: the initial temperature (or storage temperature) which, in the present case, is -20°C, and Δt is the heating time (30 minutes). The thermogram is performed using an infrared camera for the overall distribution on the top surface of the product.

σ is the calculation of standard deviation of the upper side temperature distribution in the thermograms. The lower value of σ, the more uniform the temperature on the top surface of the product.

TI is the lowest temperature of the product measured after 30-minute heating time using fibre-optic probes, which are, located about 1.5 cm beneath the centre of the coldest surface area as detected on the thermogram.

As shown by Table 1, the ARH is improved by about 29% and the standard deviation substantially reduced by the incorporation of 6% of dry-ice particles into the lasagne, compared to the original product. It may be considered that the complete reheating process is completed in about 26 to 28 minutes if 6% by weight of dry-ice particles is incorporated into the lasagne.

### EXAMPLE 4:

Tests were similarly carried out in the ovens for the macaroni and cheese product of Example 2. The reheating time was 25 minutes. The product of the invention was compared to a non-treated macaroni and cheese product.

The results for the pertinent microwave heating parameters are given in table 2 below.

**TABLE 2**

| | ΔTm/Δt (°C/min) | σ | TI (°C) |
|---|---|---|---|
| Comparative | | | |
| Non treated Mac&Cheese | 3.51 | 4.1 | 54.5 |

| Invention | | | |
|---|---|---|---|
| Mac&Cheese with 3% b.w. | 4.04 | 3.2 | 64.0 |
| dry-ice | | | |
| Mac&Cheese with 6% b.w. dry-ice | 4.78 | 3.8 | 70.2 |

The ARH is improved by about 36% through the addition of 6% by weight of dry-ice particles which corresponds to a reduction of about 29% in the corresponding reconstitution time. It may be considered that reheating is fully achieved in about 18 to 20 minutes if 6 % by weight of CO₂ dry-ice is used. A substantial evening-out of the temperature profile at the surface of the reheated products was further noted.

Considering the quality aspects of the food product, the incorporation of a maximum of 6% by weight of dry-ice does not alter the sensorial attributes such as flavour and taste of the product nor does it alter the safety.

## Claims

1. A method for producing a frozen food product having enhanced coupling properties with microwaves comprising
providing a non-frozen food product,
adding to the non-frozen food product an amount of carbon dioxide in dry-ice form,
freezing said food product containing said carbon dioxide to obtain a frozen food product while allowing said carbon dioxide to sublimate and form gas bubbles distributed within the frozen food product.

2. A method according to claim 1 wherein, the temperature difference between the initial temperature of the carbon dioxide when added to the food product and the final temperature of the frozen food product at storage is in a range of 35 to 60°C, preferably in the range of 35 to 50°C.

3. A method according to claim 1 or 2, wherein carbon dioxide is added in dry-ice form in an amount of at least 3 % by weight of the food product.

4. A method according to any of claims 1 to 3, wherein carbon dioxide is added in the form of finely ground dry-ice particles having an average size of 1 to 4 mm, preferably of 2 to 3 mm, to the food product.

5. A method according to any of claims 1 to 4, wherein freezing is carried out so as to form a majority of evenly distributed gas bubbles having a size sufficient to induce a substantially uniform absorption of microwave energy.

6. A method according to claim 5, wherein a majority of the gas bubbles has a size of at least one millimetre.

7. A method according to any of claims 1 to 6, wherein freezing comprises lowering the temperature of the food product to a temperature lower than the storage temperature, then slowly increasing the temperature to the temperature of storage.

8. A method according to claim 7, wherein freezing comprises lowering the food product to a temperature comprised between - 39 to - 45°C, then slowly increasing to a temperature of storage comprised between - 21 to - 18 °C.

9. A frozen food product comprising enhanced coupling properties with microwaves wherein it comprises at least 3% by weight of carbon dioxide in the form of gas bubbles distributed within the frozen food product a majority of which having a size of at least 1 mm.

10. A frozen food product according to claim 9, wherein it comprises from 3 to 6% by weight of carbon dioxide in the form of gas bubbles.
